Europäisches Patentamt

European Patent Office

Office européen des brevets

(11) Veröffentlichungsnummer: **0 115 630**
**A2**

(12) # EUROPÄISCHE PATENTANMELDUNG

(21) Anmeldenummer: **83113103.2**

(51) Int. Cl.³: **B 01 D 35/28**

(22) Anmeldetag: **24.12.83**

(30) Priorität: **11.01.83 DE 3300596**

(43) Veröffentlichungstag der Anmeldung: **15.08.84**
**Patentblatt 84/33**

(84) Benannte Vertragsstaaten: **AT FR GB IT NL SE**

(71) Anmelder: **Taprogge Gesellschaft mbH,**
**Wacholderstrasse 7, D-4000 Düsseldorf 31 (DE)**

(72) Erfinder: **Mayer, Georg, Bendenkamp 35,**
**D-4030 Ratingen 3 (DE)**
Erfinder: **Grobe, Klaus, Habichtstrasse 14,**
**D-4100 Duisburg 1 (DE)**

(74) Vertreter: **Andrejewski, Walter et al, Patentanwälte**
**Andrejewski, Honke & Partner**
**Postfach 10 02 54 Theaterplatz 3, D-4300 Essen 1 (DE)**

(54) **Siebanlage für die mechanische Reinigung von fliessendem Wasser.**

(57) Siebanlage für die mechanische Reinigung von in einem offenen Gerinne fließendem Abwasser mit Siebkasten, zumindest einer im Siebkasten schräg zur Strömungsrichtung des Wassers angeordneten Siebfläche und Abreinigungseinrichtung für die Siebfläche. Der Siebkasten ist in Strömungsrichtung des zu behandelnden Wassers vertikal in zumindest zwei Siebkammern geteilt. An diese ist anströmseitig je eine mit einem Steuerventil versehene Abführleitung angeschlossen, die mit einer Pumpe ausgerüstet ist. Anströmseitig vor den Siebkammern befindet sich außerdem eine Abreinigungsklappe, mit der die Siebkammern einzeln absperrbar sind. Die Abreinigung der Siebflächenbereiche der einzelnen Siebkammern erfolgt durch Schließen der Abreinigungsklappe sowie Rückspülung mit Hilfe der Pumpe.

- 1 -

Siebanlage für die mechanische
Reinigung von fließendem Wasser

Die Erfindung bezieht sich gattungsgemäß auf eine Siebanlage für die mechanische Reinigung von in einem offenen Gerinne fließendem Wasser, - mit Siebkasten, zumindest einer im Siebkasten schräg zur Strömungsrichtung des Wassers angeordneten Siebfläche und Abreinigungseinrichtung für die Siebfläche. - Solche Siebanlagen werden zur mechanischen Reinigung von Abwasser im Zusammenhang mit Kläranlagen eingesetzt, sie arbeiten aber auch und insbes. als Vorreinigungs-Siebanlagen für Kühlwasser bei Kraftwerkskondensatoranlagen und dgl. Der Siebkasten ist im allgemeinen nach oben offen.

Bei der bekannten gattungsgemäßen Siebanlage (Imhoff "Taschenbuch der Stadtentwässerung", 24. Aufl., S. 102, Bilder 23a, 23b und 23c) ist die in dem Siebkasten angeordnete Siebfläche ein Rechen, dessen Rechenstäbe gleichsam in einer schiefen Ebene schräg von unten nach oben oder bogenförmig von unten nach oben geführt sind. Das teilt zwar den Strom des fließenden Wassers, teilt jedoch in dem Siebkasten keine funktionell differenzierbaren Siebkammern ab. Die Abreinigung erfolgt mit Hilfe von Kämmen oder ähnlichen mechanischen Instrumenten, deren Zähne zwischen die Rechenstäbe fassen und bei einer Bewegung von unten nach oben abgesetzte Verunreinigungen austragen. Die Abreinigungseinrichtung arbeitet insoweit rein mechanisch. Der mechanische Aufwand, der steuerungstechnische Aufwand und der wartungstechnische Aufwand sind erheblich. Für andere Zwecke, nämlich für die mechanische Reinigung eines Kühlwasserstromes in einem geschlossenen Strömungskanal bei Kraftwerkskondensatoren kennt man Siebeinrichtungen (Prospekt Hawker Siddeley Brackett Ltd., Ref. No. 2010, S. 3), bei denen ein Siebkorb vorgesehen ist, der in erster Näherung zylindrisch oder kegelförmig gestaltet ist und dessen Korbwandung gleichsam harmonikaförmig gewellt ist. Die Wellenberge und Wellentäler verlaufen praktisch parallel zur Achse des Siebkorbes. Die Flanken der Wellenberge bzw. Wellentäler bilden die einzelnen Siebflächen. Die Rückspüleinrichtung besteht aus einem Rückspülkasten, an den ein Abführungsstutzen angeschlossen ist. Der Rückspülkasten kann mit dem Abführungsstutzen um die Achse der so aufgebauten Siebvorrichtung geschwenkt werden, wobei nacheinander Bereiche der Siebflächen durch Absaugen abgereinigt werden können. Das ist eine antriebstechnisch und steuerungstechnisch aufwendige, in der Wirkung oft unbefriedigende Maßnahme.

Der Erfindung liegt die Aufgabe zugrunde, eine gattungsgemäße Siebanlage so weiter auszubilden, daß die Abreinigung durch hydrodynamische Kräfte und unter Verzicht auf mechanische Hilfseinrichtungen, wie Kämme, erfolgen kann.

Zur Lösung dieser Aufgabe lehrt die Erfindung, daß der

- 3 -

Siebkasten in Strömungsrichtung des zu behandelnden Wassers vertikal in zumindest zwei Siebkammern geteilt ist,

an welche anströmseitig je eine mit einem Steuerventil versehene Abführleitung angeschlossen ist, die mit einer Pumpe ausgerüstet ist,

daß anströmseitig vor den Siebkammern eine Abreinigungsklappe angeordnet ist, mit der die Siebkammern einzeln absperrbar sind, und daß die Abreinigung der Siebflächenbereiche der einzelnen Siebkammern durch Schließen der Abreinigungsklappe sowie Rückspülung mit Hilfe der Pumpe durchführbar ist. - Die Erfindung nutzt die Tatsache, daß an einer Siebfläche, die schräg zur Hauptströmungsrichtung eines fließenden Wassers angeordnet ist, abgesetzte Verunreinigungen hydrodynamisch verhältnismäßig leicht abgelöst werden können, wenn man die Strömungsrichtung umkehrt, also eine sogenannte Rückspülung vornimmt. Die Erfindung gibt an, wie auf einfache Weise die dazu erforderlichen baulichen und funktionellen Maßnahmen verwirklicht werden können. Von besonderem Vorteil ist die Tatsache, daß bei der erfindungsgemäßen Siebanlage wegen der Rückspülung mit Hilfe einer Pumpe der im übrigen durch das offene Gerinne fließende Wasserstrom praktisch nicht verändert wird, wenn für die Rückspülung zusätzliches Wasser aus einem Reservoir, beispielsweise aus einem Kühl-

- 4 -

wasserreservoir, angesaugt werden kann, so daß beispielsweise ein zugeordneter Kühlwasserstrom unverändert bleibt.

Im Rahmen der Erfindung ist die Gestaltung der Siebfläche und des Siebkastens grundsätzlich beliebig. Eine bevorzugte Ausführungsform der Erfindung ist in dieser Hinsicht dadurch gekennzeichnet, daß der Siebkasten durch mehrere, in Strömungsrichtung konisch zulaufende Siebkästen in Siebkammern geteilt ist, vor denen um vertikale Achsen schwenkbare Abreinigungsklappen angeordnet sind. Insoweit besteht die integrierte Siebfläche aus mehreren Siebkörben. Im allgemeinen wird man an jede Siebkammer eine Abführleitung anschließen, die jedoch in eine Sammelleitung übergehen kann.

Die Pumpe, mit der im Rahmen der Erfindung die Rückspülung bewirkt wird, kann als Unterwasserpumpe ausgeführt sein. In diesem Falle kann jede der Abführleitungen mit einer solchen Pumpe ausgerüstet sein. Ein anderer Vorschlag der Erfindung geht dahin, die Pumpe als Saugpumpe auszuführen und an die gemeinsame Sammelleitung anzuschließen. Es versteht sich, daß bei dieser Ausführungsform die Pumpe mit einer Ansaughilfe auszurüsten ist. Eine bevorzugte Ausführungsform der Erfindung, die auch deshalb vorteilhaft ist, weil bei der Abreinigung von der Siebfläche freikommende Fische nicht durch eine Pumpe geführt werden müssen, ist dadurch gekennzeichnet, daß die Pumpe als Vakuumpumpe ausgeführt ist, die auf einen Vakuumkessel

0115630

- 5 -

arbeitet und daß die Abführleitung bzw. die Abführleitungen bzw. die Sammelleitung an den Vakuumkessel angeschlossen sind.

Im folgenden wird die Erfindung anhand einer lediglich ein Ausführungsbeispiel darstellenden Zeichnung ausführlicher erläutert. Es zeigen in schematischer Darstellung

Fig. 1 eine Seitenansicht einer erfindungsgemäßen Siebanlage,

Fig. 2 eine Draufsicht auf den Gegenstand nach Fig. 1,

Fig. 3 eine Ansicht des Gegenstandes der Fig. 1 aus Richtung des Pfeiles A und

Fig. 4 entsprechend der Fig. 1 eine andere Ausführungsform einer erfindungsgemäßen Siebanlage.

Die in den Figuren dargestellte Siebanlage ist für die mechanische Reinigung von in einem offenen Gerinne 1 fließendem Wasser bestimmt. Es mag sich dabei um die Behandlung von Abwasser im Zusammenhang mit Kläranlagen oder um die Behandlung von Kühlwasser bei einer Kraftwerkskondensatoranlage handeln. Zum grundsätzlichen Aufbau gehören ein Siebkasten 2, zumindest eine im Siebkasten 2 schräg zur Strömungsrichtung des Wassers angeordnete Siebfläche 3 und eine Abreinigungseinrichtung für die Sieb-

- 6 -

fläche.

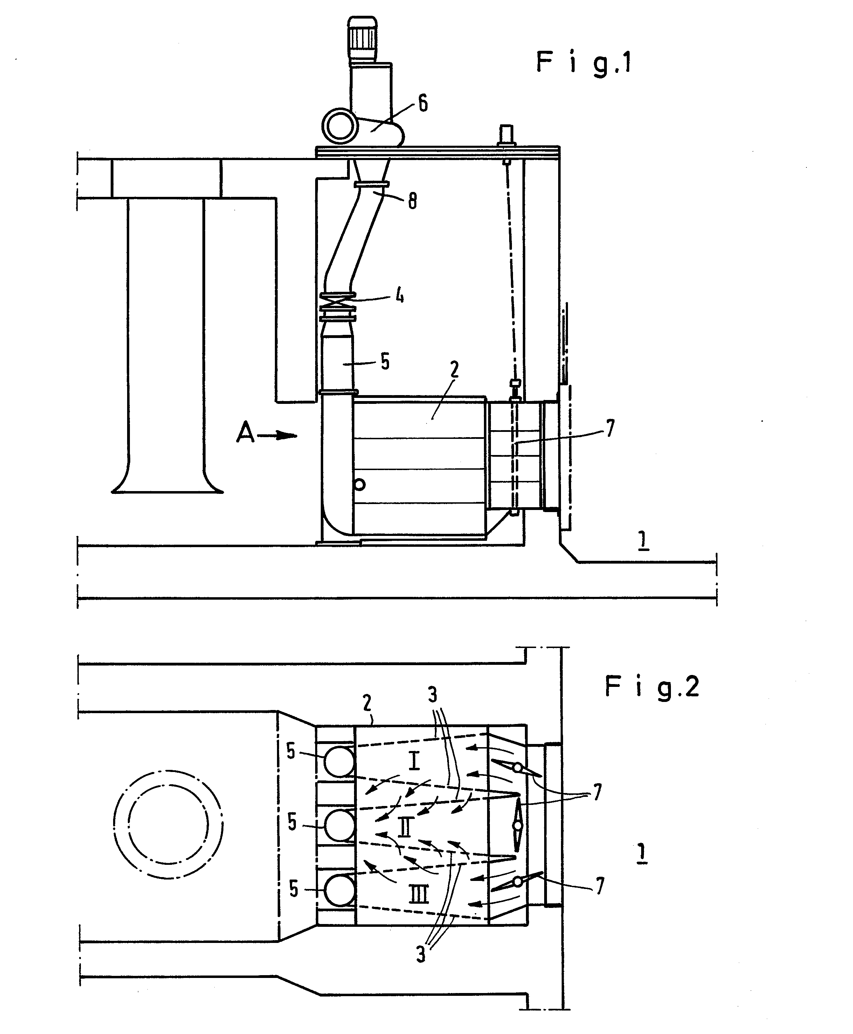

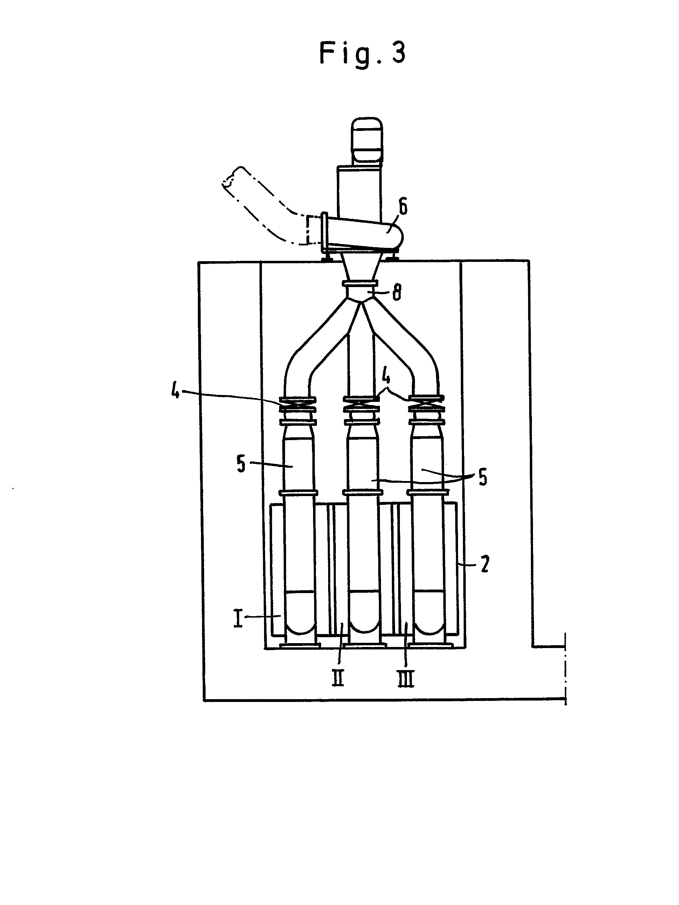

Aus einer vergleichenden Betrachtung insbes. der Fig. 2 und 3 entnimmt man, daß der Siebkasten 2 in Strömungsrichtung des zu behandelnden Wassers vertikal in im Ausführungsbeispiel drei Siebkammern I, II, III geteilt ist. An diese ist anströmseitig je eine mit einem Steuerventil 4 versehene Abführleitung 5 angeschlossen, die mit einer Pumpe 6 ausgerüstet ist. Anströmseitig vor den Siebkammern I, II, III befindet sich jeweils eine Abreinigungsklappe 7, mit der die Siebkammern I bzw. II bzw. III einzeln absperrbar sind. Im Ausführungsbeispiel zeigt Fig. 2, daß die Abreinigungsklappen 7 vor der linken und rechten Siebkammer I bzw. III geöffnet sind, während die Abreinigungsklappe 7 der mittleren Siebkammer II geschlossen ist. Die linke und rechte Siebkammer I, III leisten also die übliche Reinigungsarbeit, die Siebfläche 3 der mittleren Siebkammer II erfährt eine Abreinigung, und zwar dadurch, daß ihre Abreinigungsklappe 7 geschlossen sowie eine Rückspülung mit Hilfe der Pumpe 6 bewirkt ist. Die eingezeichneten Pfeile zeigen bezüglich der mittleren Siebkammer II die Strömung bei dieser Abreinigung, während in der linken und rechten Siebkammer I bzw. III die Strömung bei der üblichen Reinigungsarbeit angedeutet worden ist. Im Ausführungsbeispiel und nach bevorzugter Ausführungsform der Erfindung ist der Siebkasten 2 durch mehrere in Strömungsrichtung konisch zulaufende Siebkörbe mit vertikalen Siebwänden in

- 7 -

Siebkammern I, II und III eingeteilt, vor denen jeweils um eine vertikale Achse schwenkbar eine Abreinigungsklappe 7 angeordnet ist. Hier besitzt auch jede der Siebkammern I, II, III eine Abführleitung 5, die gleichsam in der Spitze der konusförmigen Siebkörbe angeschlossen ist.

Die Pumpe 6 könnte als Unterwasserpumpe ausgeführt sein. Das Ausführungsbeispiel der Fig. 1 bis 3 zeigt eine erfindungsgemäße Siebanlage mit als Saugpumpe ausgeführter Pumpe 6, die an die gemeinsame Sammelleitung 8 der Abführleitungen 5 angeschlossen ist und selbstverständlich mit einer üblichen Ansaughilfe ausgerüstet ist.

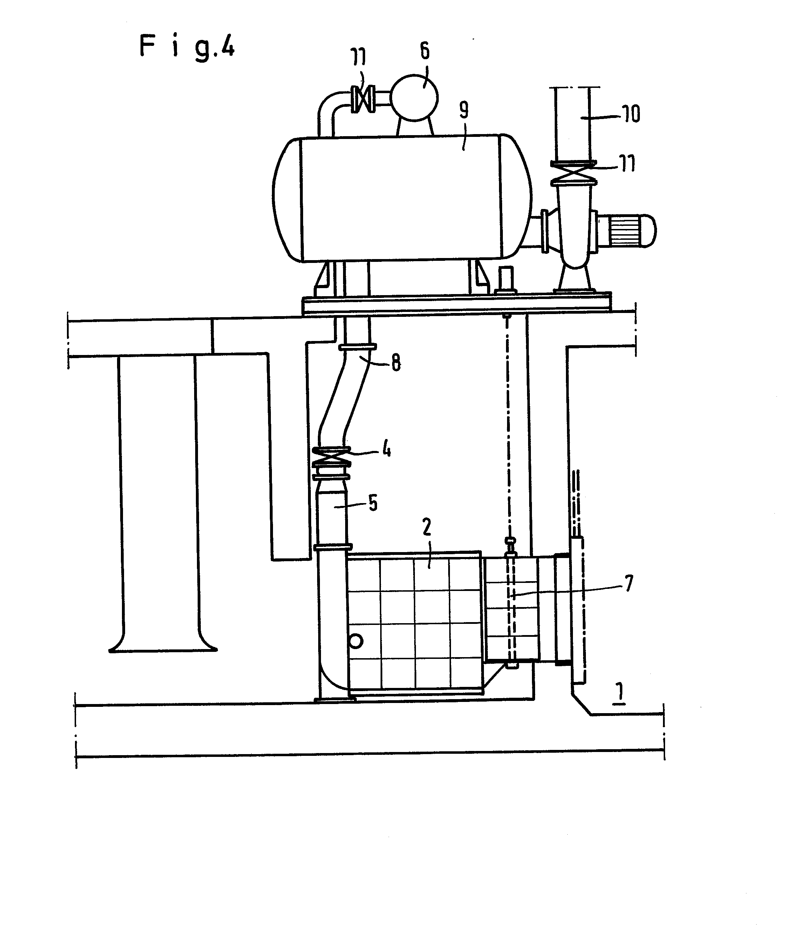

Bei der Ausführungsform nach Fig. 4 ist die Pumpe 6 als Vakuumpumpe ausgeführt, die auf einen Vakuumkessel 9 arbeitet, wobei die Sammelleitung 8 an den Vakuumkessel 9 angeschlossen ist. Es versteht sich, daß hier, wie üblich beim Arbeiten mit Vakuumkesseln, taktweise gearbeitet werden muß, wobei zunächst der Vakuumkessel 9 evakuiert wird, dann im Wege der Abreinigung das abzuführende Wasser in den Vakuumkessel 9 eingesaugt wird und danach dieses Wasser aus dem Vakuumkessel über eine Abgabeleitung 10 wieder abgeführt wird. Dazu werden die eingezeichneten Ventile 11 entsprechend betätigt und die Vakuumpumpe 6 entsprechend gesteuert.

- 8 -

Patentansprüche:

1. Siebanlage für die mechanische Reinigung von in einem offenen Gerinne fließendem Wasser, - mit Siebkasten, zumindest einer im Siebkasten schräg zur Strömungsrichtung des Wassers angeordneten Siebfläche und Abreinigungseinrichtung für die Siebfläche, d a d u r c h   g e k e n n - z e i c h n e t, daß der Siebkasten (2) in Strömungsrichtung des zu behandelnden Wassers vertikal in zumindest zwei Siebkammern (I, II ...) geteilt ist,

an welche anströmseitig je eine mit einem Steuerventil (4) versehene Abführleitung (5) angeschlossen ist, die mit einer Pumpe (6) ausgerüstet ist,

daß anströmseitig vor den Siebkammern (I, II ...) eine Abreinigungsklappe (7) angeordnet ist, mit der die Siebkammern (I, II ...) einzeln absperrbar sind, und daß die Abreinigung der Siebflächenbereiche der einzelnen Siebkammern (I, II ...) durch Schließen der Abreinigungsklappe (7) sowie Rückspülung mit Hilfe der Pumpe (6) durchführbar ist.

2. Siebanlage nach Anspruch 1, dadurch gekennzeichnet, daß der Siebkasten (2) durch mehrere, in Strömungsrichtung konisch zulaufende Siebwände in Siebkammern (I, II ...) geteilt ist, vor denen um vertikale Achsen schwenkbare

- 9 -

Abreinigungsklappen (7) angeordnet sind.

3. Siebanlage nach einem der Ansprüche 1 oder 2, dadurch gekennzeichnet, daß jede Siebkammer (I, II ...) eine Abführleitung (4) aufweist, die in eine Sammelleitung (8) übergeht.

4. Siebanlage nach einem der Ansprüche 1 bis 3, dadurch gekennzeichnet, daß die Pumpe bzw. die Pumpen (6) als Unterwasserpumpe ausgeführt ist bzw. sind.

5. Siebanlage nach einem der Ansprüche 1 bis 3, dadurch gekennzeichnet, daß die Pumpe (6) als Saugpumpe ausgeführt und an die gemeinsame Sammelleitung (8) angeschlossen ist.

6. Siebanlage nach einem der Ansprüche 1 bis 3, dadurch gekennzeichnet, daß die Pumpe (6) als Vakuumpumpe ausgeführt ist, die auf einen Vakuumkessel (9) arbeitet, und daß die Abführleitung (7) bzw. die Abführleitungen (7) bzw. die Sammelleitung (8) an den Vakuumkessel (9) angeschlossen sind.

0115630

Fig.1

Fig.2

...

0115630

## Fig. 3

0115630

Fig.4